(19) **Europäisches Patentamt**
**European Patent Office**
**Office européen des brevets**

(11) **EP 2 386 828 B1**

(12) **EUROPEAN PATENT SPECIFICATION**

(45) Date of publication and mention
of the grant of the patent:
**11.12.2013 Bulletin 2013/50**

(51) Int Cl.:
**G01C 21/16** *(2006.01)*        **G01C 21/20** *(2006.01)*
**G01C 22/00** *(2006.01)*

(21) Application number: **10162753.7**

(22) Date of filing: **12.05.2010**

(54) **Method and system for detection of a zero velocity state of an object**

Verfahren und System zur Erkennung eines Null-Geschwindigkeitszustands eines Objekts

Procédé et système pour détecter l'état de vitesse zéro d'un objet

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**16.11.2011 Bulletin 2011/46**

(73) Proprietor: **Technische Universität Graz**
**8010 Graz (AT)**

(72) Inventor: **Walder, Ulrich**
**8561, Söding (AT)**

(74) Representative: **Dilg, Haeusler, Schindelmann**
**Patentanwaltsgesellschaft mbH**
**Leonrodstrasse 58**
**80636 München (DE)**

(56) References cited:
- JIMENEZ A R ET AL: "A comparison of Pedestrian Dead-Reckoning algorithms using a low-cost MEMS IMU" INTELLIGENT SIGNAL PROCESSING, 2009. WISP 2009. IEEE INTERNATIONAL SYMPOSIUM ON, IEEE, PISCATAWAY, NJ, USA, 26 August 2009 (2009-08-26), pages 37-42, XP031546088 ISBN: 978-1-4244-5057-2
- YOUNG SOO SUH ET AL: "Pedestrian inertial navigation with gait phase detection assisted zero velocity updating" AUTONOMOUS ROBOTS AND AGENTS, 2009. ICARA 2009. 4TH INTERNATIONAL CONFERENCE ON, IEEE, PISCATAWAY, NJ, USA, 10 February 2009 (2009-02-10), pages 336-341, XP031443796 ISBN: 978-1-4244-2712-3
- CHO SY, LEE KW, PARK CG, LEE JG: "A personal navigation system using low-cost MEMS/GPS/ Fluxgate" PROCEEDINGS OF THE 59TH ANNUAL MEETING OF THE INSTITUTE OF NAVIGATION AND CIGTF 22ND GUIDANCE TEST SYMPOSIUM, 25 June 2003 (2003-06-25), pages 122-127, XP002606264 Albuquerque, NM
- YUN X.BACHMANN E. R.MOORE H.CALUSDIAN J.: "Self-contained Position Tracking of Human Movement Using Small Inertial/Magnetic Sensor Modules" PROCEEDINGS OF IEEE INTERNATIONAL CONFERENCE ON ROBOTICS AND AUTOMATION, 21 May 2007 (2007-05-21), XP031389170

EP 2 386 828 B1

**Description**

Field of invention

The present invention relates to a method and a system for determining a zero velocity state of an object, in particular whether a velocity of an object is below a predetermined threshold value. In particular, the present invention relates to a method and a system for determining a zero velocity state of an object based on measuring a plurality of accelerations of the object. Thereby, the method is in particular suitable for pedestrian dynamics modelling.

A position of an object located outdoors may be determined using the global positioning system (GPS) which relies on communications of the object to satellites orbiting the earth. In contrast, if the object is located indoors, communication to satellites may not be possible due to building structures with robust roofs or wall structures (in particular including an electrical conductor, such as a metal) surrounding the object and in particular surrounding a transmitter exchanging messages with the satellite.

For determining a position of an object, in particular a position of a pedestrian, located indoors a pedestrian dead reckoning (PDR) method and system may be applied. The pedestrian dead reckoning method utilizes small acceleration sensors which may be affixed to the body, in particular to a foot of the pedestrian. The acceleration sensor may also be referred to inertial measurement unit (IMU), containing gyroscopes and magnetometers as well and the pedestrian dead reckoning method may also be referred to as inertial navigation in the context of the present application. Indoor positioning may in particular be advantageous or required during emergency situations, such as a fire inside a building.

Unfortunately until now there were no mature technologies that are able to compute the current position of human beings within buildings with an adequate accuracy for a longer time and for changing movement types. Existing dead reckoning systems based on inertial technologies use a Kalman filter and either direct integration for foot mounted sensors or simple step recognition algorithms. The latter compute the track by adding fix step lengths under a measured angle. Improvements in angle accuracy can be achieved when combining these methods with map matching techniques (sensor - building model interaction). In the case of foot mounted sensors until now it has been difficult to compute the track for a longer time with the same sensor configuration , especially when movement types are changing often and quickly. The reason is that it is difficult to find proper zero-velocity states for uncommon movement patterns, there in fact velocities may never be really zero, or the time between two zero-velocity states is so long that drift and noise have an influence on the direct integration. In the case of body mounted sensors (e.g. DRM4000, Honeywell) it is difficult to recognize the movement direction. Stepping backwards e.g. can not be distinguished from moving forward with this sensor system.

From the publication by Glanzer et al. ("Semi-autonomous Indoor Positioning Using MEMS-based Inertial Measurement Units and Building Information", Workshop on Positioning, Navigation and Communication 2009) it is known to use a micro electromechanical system (MEMS) based inertial measurement unit for measuring the acceleration and to use a mobile computer including a database with characteristic building information to establish an inertial navigation system. From the measured acceleration signals a distance travelled by the pedestrian over a certain time span may be calculated by a double integration.

However, it has been observed that the accuracy of the derived distance and also the thus derivable position, may not be high enough due to measurement errors. In particular, the measurement errors of the acceleration may lead to an inaccurate velocity which may lead to a drift of the position of the pedestrian as determined by the inertial navigation system even if the pedestrian is actually at rest, i.e. having zero velocity. Thus, it has been observed that so-called zero velocity updates (ZUPT) need to be applied in order to correct the measurement errors and to compensate the drift.

However, it turned out that it is difficult to accurately determine at which point in time the pedestrian is at rest (i.e..in a zero velocity state) and thus has a zero velocity.

The publication by Tome et al. ("Improving pedestrian dynamics modelling using fuzzy logic", Tome P, Bonzon F., Merminod B. and Aminian K., EPFL Geodetic Engineering LAB and EPFL Laboratory of Movement Analysis and Measurement) proposes to perform a gait analysis using fuzzy logic to improve pedestrian dynamic modelling. However, the model may only be applied to determine whether the pedestrian walks, ascents or descents, but not to determine the precise velocity or position of the pedestrian.

The publication by Kwakkel et al. ("Foot and Ankle Kinematics During Gait Using Foot Mounted Inertial System", Kwakkel SP., Godha S. and Lachapelle G., ION NTM, San Diego CA, 22.-24 .1.2007) proposes to use an inertial measurement unit for the kinematic analysis of foot/ankle rotations.

The publication by Yun et al. ("Self-contained Position Tracking of Human Movement Using Small Inertial/ Magnetic Sensor Modules", Yun X., Bachmann E. R., Moore H. and Calusdian J., Proceedings of IEEE International Conference on Robotics and Automation, Roma, Italy, 10.-14.4.2007) discloses a position tracking system using inertial/ magnetic sensors attached to the human to calculate the position during walking and running. Thereby, short periods of zero foot velocity when the foot is in contact with the ground are taken into account to allow drift error correction. The periods of zero foot velocity are determined, if the acceleration is within a threshold for a specific period of time.

"A comparison of Pedestrian Dead-Reckoning algorithms using a low-cost MEMS IMU" by A.R.Jimenez et al., IEEE International Symposium on Intelligent Signal Processing 2009, describes algorithms for step detection, stride length, heading and position estimation.

"Pedestrian inertial navigation with gait phase detection assisted zero velocity updating" by Y.S.Suh et al., Proceedings of the 4th International Conference on Autonomous Robots and Agents, 2009, discloses a zero-velocity updating algorithm using a hidden Markov model.

" A Personal Navigation System Using Low-Cost MEMS/GPS/Fluxgate" by S.Y.Cho et al., ION 59th Annual Meeting, 2003, describes a step detection algorithm where the measured accelerations are differentiated and subsequently a sliding window summation is carried out.

There may be a need for a method and a system for determining whether an object is in a zero velocity state, in particular whether the velocity of an object is below a predetermined threshold value, in particular whether the object has zero velocity, which provides higher accuracy. Further, there may be a need for a method and system for determining a coordinate of an object which method is based on measuring accelerations and which provides coordinates of an object, i.e. three-dimensional positional information providing a higher accuracy. Further, there may be a need for a method for determining a coordinate of an object, the method relying on measured accelerations, wherein a drift problem has been reduced.

According to an embodiment a method for determining a zero velocity state, in particular whether a velocity of an object is below a predetermined threshold value, in particular whether a velocity of an object is zero, comprises measuring a plurality of accelerations of the object within a time interval from a point in time to a later point in time; deriving information indicative of a plurality of velocities of the object within the time interval based on the measured accelerations; and determining whether the velocity is below the predetermined threshold value at the point in time by applying a criterion based on the derived information indicative of the plurality of the velocities.

The object may be any object which moves (in particular relative to the inertial system at the surface of the earth where the object is situated or moves), wherein the movement comprises at least one period in time where the object has a zero velocity, or a velocity smaller than a predetermined threshold value, relative to the inertial system of the earth. In particular, the  motion of the object may be according to a repeating motion pattern. The motion pattern may comprise periods, wherein the object moves with a non-zero velocity and may also comprise periods where the object is at rest, i.e. has zero velocity in the inertial system of the earth.

In particular, the object may be a living creature, such as an animal or a human being. Further in particular, the object may be a pedestrian moving while in an upright position, in a lying position or in a flexed position, wherein the moving is performed using the body resources of the pedestrian, such as his muscles and his own biological energy. The pedestrian may for example walk, run, crawl or perform a combination of the aforementioned motion patterns. In particular, the motion of the pedestrian may be at least approximately periodic. Further, the pedestrian may move according to a first motion pattern during a first time period and may then move according to a second motion pattern different from the first motion pattern during a second time period later than the first time period. In particular, the pedestrian may first walk for a while, then may run for a while, then ascend stairways, descend stairways or perform these motion patterns in an arbitrary sequence or arbitrary order.

The method may be used to determine when it should be assumed that the velocity of the object is zero for improving the accuracy of a method for determining a coordinate of the object, in order to reduce a drift problem involving erroneous determination of the velocity of the object. Thus, the method may be designed such that periods during which the velocity of the object should be set to zero are identified, in order to improve an accuracy of a determination of a position of the object, although during these identified periods in time the velocity of the object may not necessarily be actually zero relative to the inertial system of the earth.

In the context of the present application a zero velocity state may be a state in which the object has a velocity less than a predetermined threshold, in particular less than 0.05 m/.s, more in particular less then 10 mm/s, more in particular less than 1 mm/s, more in particular less than 0.1 mm/s, more in particular essentially zero m/s, wherein the velocity is measured in the local inertial system of the surface of the earth at the location of the object.

Measuring the plurality of accelerations may comprise measuring a plurality of accelerations in one, two or three different directions, such as a x-direction, a y-direction and a z-direction which may be orthogonal to each other. Measuring the acceteratiops may for example be performed using an inertial sensor or an inertial sensor and a magnetic sensor, in particular using a micromechanical inertial measurement unit (IMU). Further, the measuring the accelerations may involve applying a Kalman filter. In particular, the IMU may be mounted close to the pedestrian's foot, such as integrated or mounted at a shoe. The accelerations may be measured continuously or by sampling the accelerations at certain sample time intervals between the point in time to the later point in time. In particular, the sampling time intervals may be equidistant sampling time intervals. In particular, the sampling time intervals may be between 0.005 seconds and 0.5 seconds.

From the plurality of accelerations of the object information may be derived which is indicative of a plurality of velocities of the object within the time interval. Deriving this information may comprise performing a summation of accelerations, in particular an integration of accelerations, over different time intervals. According to an embodiment, the derived information indicative of the plurality of velocities represents the velocities of the object (in particular in the inertial system of the earth as introduced above). According to other embodiments the plurality of velocities of the object within the time interval may at least be derivable from the derived information indicative of the plurality of velocities of the object. In particular, deriving the actual velocities of the object may require a knowledge of at least one initial velocity. Thus, without this additional information it may not be possible to derive the actual velocities of the object solely based on the measured plurality of accelerations.

Utilizing the derived information indicative of the plurality of the velocities (within the time interval from the point in time to the later point in time) the criterion may be established based on which it may be determined whether the object is in a zero velocity state, in particular whether the velocity is below the predetermined threshold value, at the point in time, in particular whether the velocity is zero at the point in time.

Thus, information of the movement of the object of at least one point in time later than the point in time is used to determine whether the velocity is below the predetermined threshold value (or is zero) at the point in time. Thus, information indicative of the velocity of the object at a time later than the point in time is required to determine whether the velocity is zero (or below the predetermined threshold value) at the point in time. Using the information indicative of the velocity of the object at times later than the point in time may improve the determination whether the velocity is zero (or below the predetermined threshold value, or whether the object is in a zero velocity state). In particular, an evolution of the velocity after the point in time may be taken into account for determining whether the object is in a zero velocity state. In particular, the evolution of the velocities later than the point in time may depend on a motion pattern and may have a recognizable characteristics which may allow a more accurate determination whether the object is in a zero velocity state.

The criterion may be a logical criterion, in particular comprising several sub-criteria which may be combined using logical operations such as a logical AND and/or a logical OR.

According to an embodiment the criterion comprises a factor depending on a quantity indicative of the velocities, in particular a maximum of the velocities, since a last determination that the velocity of the object is below the predetermined threshold value.

By providing that the factor depends on a quantity indicative of the velocities, in particular a maximum of the velocity since the last determination that the velocity of the object is zero (or below the predetermined threshold value) a change of the motion of the object from one motion pattern to a second motion pattern different from the first motion pattern (in particular having higher average or maximum velocities) may be taken into account. Thus, the method may in particular be applied to a moving object which changes its motion pattern over time. Irrespective of a change of the motion pattern the determination that the object is in a zero velocity state may nevertheless be accurate.

In particular, the factor may be represented by a mathematical function on the maximum of the velocity since the last determination that the velocity of the object is zero or below the predetermined threshold value. According to an embodiment the criterion comprises a factor depending on an average of the velocity since a last determination that the object is in a zero velocity state. According to an embodiment the criterion comprises a factor depending on a quantity representing an overall magnitude or a maximum of the velocity since a last determination that the object is in a zero velocity state. In particular, the factor may change over time in accordance with a change of a motion pattern of the motion of the object. Thereby, the accuracy of the determination of a zero velocity state of the object may be improved.

According to an embodiment the factor increases when the maximum of the velocity since the last determination that the object is in a zero velocity state increases. According to an embodiment the factor increases when an average of the velocity since the last determination that the object is in a zero velocity state increases. Thereby, in particular the criterion applied to determine the zero velocity state of the object may be adaptable to different motion patterns of the object. Thereby, the criterion may become context sensitive for improving the determination of the zero velocity state of the object.

According to an embodiment the factor increases (when the maximum of the velocity increases) according to a polynomial, in particular a polynomial of third order in the maximum velocity. In particular, the polynomial may be characterized by coefficients of the terms of different order in the maximum of the velocity (or average of the velocity or a quantity representing an overall magnitude of the velocity). Thereby, the dependence of the factor on the motion pattern (in particular the dependence on a quantity indicative of the velocities since the last determination that the object is in a zero velocity state) may be simplified. Thus, the criterion may be applied to different motion patterns without complicating the computation or without requiring extensive computation time in particular without switching to another criterion.

According to an embodiment a form of the dependency of the factor on the maximum velocity (or average velocity or quantity indicative of the velocities since the last determination that the object is in a zero velocity state) is determined such that a determination that the object is in a zero velocity state is refined, when the object moves according to a predefined motion pattern.

In particular, the form or shape of the dependency of the factor on the quantity indicative of the velocities of the object since the last determination that the object is in a zero velocity state (or that the velocity of the object is zero or below the predetermined threshold value) may be learnt from training data providing measured accelerations for a number of different motion patterns and providing also information about the zero velocity states. The learning may comprise any machine learning algorithm, such as multiple regression, neuronal network, and others.

According to an embodiment the predetermined motion pattern may be a motion pattern selected from the group consisting of walking, running, crawling, descending, and ascending. According to an embodiment the predetermined motion pattern may automatically be recognised from the afore mentioned group of motion patterns. The different motion patterns may be different with respect to average velocity/acceleration, maximum velocity/acceleration, minimum velocity/acceleration, time period between two zero velocity states (also referred to as cycle period of the motion pattern), movement direction (for example horizontal or/and vertical) and others. Thereby, the method may be refined or even optimized for a particular set of motion patterns which are expected to be carried out by the object, in particular the pedestrian, depending on the particular application.

According to an embodiment the criterion is satisfied if a first criterion or a second criterion is satisfied. By splitting the criterion into two partial criteria joined by a logical OR the computational demand of the method may be reduced and simplified. If at least the first criterion is satisfied, according to an embodiment it is determined that the object is in a zero velocity state. If at least the second criterion is satisfied, according to an embodiment, it is determined that the object is in a zero velocity state.

According to an embodiment the first criterion comprises a determination whether the acceleration at the point in time (or an average of the acceleration around the point in time) is below an acceleration threshold. In particular, the acceleration threshold may be a quantity indicative of a minimum of the plurality of measured accelerations. Thus, in particular the acceleration threshold may vary in time and may depend on the motion pattern of the object. According to an embodiment the first criterion comprises a determination whether the acceleration at the point in time is equal to a minimum of the plurality of measured accelerations (or less than 1.3, in particular less than 1.1, times the minimum of the plurality of measured accelerations). Thereby, the first criterion may comprise the determination whether the acceleration at the point in time is smaller than all (or a majority of all) subsequent accelerations measured from the point in time to the later point in time. Thereby, it may be excluded that within the time interval from the point in time to the later point in time an acceleration occurs which is smaller than the acceleration at the point in time.

According to an embodiment the first criterion comprises a determination whether the velocity at the point in time is smaller than a product of the factor, a quantity depending on a time period since the last determination that the object is in a zero velocity state (or that the velocity of the object is below a predetermined threshold value or is zero), and a velocity tolerance value. The factor may take into account that the motion pattern of the motion of the object may change. The quantity depending on the time period since the last zero velocity state may account for a typical cycle period or typical cycle periods of different motion pattern(s) and may tend to determine that the object is in a zero velocity state the greater the time since the last determination of a zero velocity state is. Thereby, zero velocity states for complex motions comprising a number of motion patterns may be determined.

According to an embodiment the second criterion comprises a determination whether the velocity at the point in time is below a velocity threshold. According to an embodiment the second criterion comprises a determination whether the velocity at the point in time is smaller or equal to a quantity indicative of a minimum of the plurality of the derived velocities (or smaller than 1.3, in particular 1.1 times the minimum of the plurality of the derived velocities). Thereby, the velocity threshold may vary with time and may in particular depend on the motion pattern of the motion of the object. In particular, when it turns out that the velocity at an instance in time after the point in time but before the later point in time is smaller than the velocity at the point in time, then the second criterion will not be satisfied. Thereby, the method looks ahead of time up to the later point in time in order to check whether velocities occur which are still smaller than the velocity at the point in time. If these smaller velocities occur, then the second criterion will not be satisfied. Thereby the method may determine that the object is not in a zero velocity state, unless the first criterion is satisfied.

According to an embodiment the second criterion comprises a determination whether the measured acceleration at the point in time is smaller than a product of the factor, a quantity depending on a time period since the last determination that the object is in a zero velocity state, and an acceleration tolerance value.

Again the appearance of the factor in the product may take into account different motion patterns of the motion of the object. Further, the quantity depending on the time period since the last determination of a zero velocity state of the object may reflect typical cycle periods of different motion patterns, wherein in particular the quantity may increase with increasing time since the last determination of a zero velocity state. In particular, for a given motion pattern it may be expected that there exists a typical cycle period between two zero velocity states of an object proceeding according to this particular motion pattern. Thereby, the determination of a zero velocity state may be further improved.

According to an embodiment the quantity (depending on a time period since the last determination that the object is in a zero velocity state or that the velocity of the object is below the predetermined threshold value) depends linearly (in particular with a positive gradient) on the time period since the last determination that the object is in a zero velocity state. Thus, the longer the time period since the last determination of a zero velocity state of the object the more probable it becomes that either the second criterion or the first criterion is satisfied. However, the first criterion and also the second criterion may comprise further partial criteria which are possibly combined by logical conjunctions.

According to an embodiment the measuring the plurality of accelerations of the object within the time interval from the point in time to the later point in time comprises measuring the accelerations at a frequency between 50 Hz and 200 Hz, in particular between 70 Hz and 150 Hz. In particular, the frequency of measuring the accelerations may depend on the motion pattern expected for the object. In particular, the frequency may be higher the higher the velocities comprised in the motion pattern are. The frequency may in particular be adapted to determine zero velocity states of a moving pedestrian. With these frequencies zero velocity states of a walking, running, crawling, ascending or descending pedestrian may be accurately determined.

According to an embodiment the measuring the plurality of accelerations of the object within the time interval from the point in time to the later point in time comprises measuring 20-60 accelerations, in particular 30-50 accelerations. In particular, the time interval may be selected such that it is less than 1.0, in particular less than 0.5, further in particular less than 0.4, times a cycle period of the motion pattern. In particular, if the motion pattern is a motion pattern of walking, the cycle period may be defined as the (average) time between two footsteps. Thereby, it may be avoided that the method for determining zero velocity state misses a footstep which could occur if the time interval would exceed the cycle time period of the motion pattern under consideration.

According to an embodiment a method for determining a coordinate of an object is provided, wherein the method comprises: determining that the object is in a zero velocity state (or whether the velocity of the object is below a predetermined threshold value or is zero) according to an embodiment of the method of determining whether a velocity of an object is below a predetermined threshold value (or is zero) according to an embodiment described above; and deriving the coordinate of the object based on the determining whether the velocity of the object is below the predetermined threshold value and based on the measured acceleration at the point in time.

Thereby, the coordinate of the object may comprise three positions of the object along three different directions, such as an x-position, measured along the x-axis, a y-position measured along the y-axis and a z-position measured along the z-axis. Other coordinate systems for defining a position of the object, such as a spherical coordinate system, a cylindrical coordinate system or others may be possible. The coordinates may be coordinates in any inertial coordinate system, such as the inertial system of the earth, in particular at the location of the object.

Deriving the coordinate of the object may comprise integrating the acceleration or summing the acceleration (s) over time, in particular performing a double integration of the acceleration. Due to one or more unknown integration constants the coordinate of the object may be ambiguous. Any information indicative of a position of the object (also one that comprises the position of the object offset by an unknown quantity) may be considered to represent a coordinate of the object. By applying the method for determining that the object is in a zero velocity state (or whether a velocity of an object is below a predetermined threshold value) to a method for deriving the coordinate of the object the derivation of the coordinate of the object may be improved regarding accuracy. In particular, uncertainties of the determination of the coordinate due to drift problems (inaccurate velocities) may be reduced.

According to an embodiment an apparatus for determining that an object is in a zero velocity state (or whether a velocity of an object is below a predetermined threshold value or is zero or corresponds to a zero velocity state) is provided, wherein the apparatus comprises an inertial sensor adapted for measuring a plurality of accelerations of the object within a time interval from a point in time to a later point in time; and a processing system adapted for deriving information indicative of a plurality of velocities of the object within the time interval based on the measured accelerations, and for determining whether the velocity is below the predetermined threshold value (or is zero or corresponds to a zero velocity state) at the point in time by applying a criterion based on the derived information indicative of the plurality of the velocities.

In particular, the apparatus may be provided as an integrated solution comprising the acceleration sensor and the processing system which may comprise program code implementing the method for determining that the object is in a zero velocity state (or whether the velocity of the object is below the predetermined threshold value). In particular, an apparatus for determining a coordinate of an object is provided which performs an embodiment of a method for determining a coordinate of an object. The apparatus may be adapted to perform the drift correction by determining the zero velocity states of the object and may further be adapted for transmitting the coordinates of the object to a base station without requiring that the base station performs an additional correction of the coordinates, such as drift correction. Thereby, the transmitter comprised in the apparatus may transmit only a limited amount of data, such as three coordinates of the object instead of transmitting plural accelerations, plural velocities at plural subsequent points in time.

According to an embodiment a system for determining a coordinate of an object is provided, the system comprising: an inertial sensor for measuring a plurality of accelerations of the object within a time interval from a point in time to a later point in time; and a processing system for receiving the plurality of measured accelerations, wherein the processing system is adapted to derive indicative of a plurality of velocities of the object within the time interval based on the plurality of measured accelerations; and to derive the coordinate of the object based on at least one of the plurality of accelerations and based on a determination whether the velocity is below a predetermined threshold value at the point in time based on a criterion comprising indicative of the plurality of velocities.

It has to be noted that embodiments of the invention have been described with reference to different subject matters. In particular, some embodiments have been described with reference to method type claims, whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims, and features of the apparatus type claims, is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.

Fig. 1 schematically illustrates a system for determining a coordinate of an object according to an embodiment;

Fig. 2 illustrates a floor plan and a trace of a walking pedestrian whose movement is analyzed according to a method for determining a coordinate of an object according to an embodiment;

Fig. 3 is a graph showing measured accelerations of a pedestrian walking along the trail indicated in Fig. 2 and also shows velocities derived according to an embodiment of determining a velocity of an object; and

Fig. 4 schematically shows an architecture of a computer-aided disaster management system (CADMS) in which a system for determining a coordinate of an object or a system for determining a zero velocity state of an object according to an embodiment may be used.

The positioning and navigation of pedestrians using inertial systems requires a two-time integration of the accelerations to determine the position and covered distance. Due to the measurement uncertainty of the accelerations, it may be necessary to use the smallest possible integration intervals. Therefore, the sensors may be mounted to the foot. A state of zero velocity may arise for a brief moment when the foot touches the ground. Depending on the movement type, however, this condition may be difficult to determine by conventional methods. The new algorithm disclosed herein may allow for reliable, rapid determination of zero velocity states, using the same parameters for all types of movement (walking, running, seals, mountain climbing, etc.).

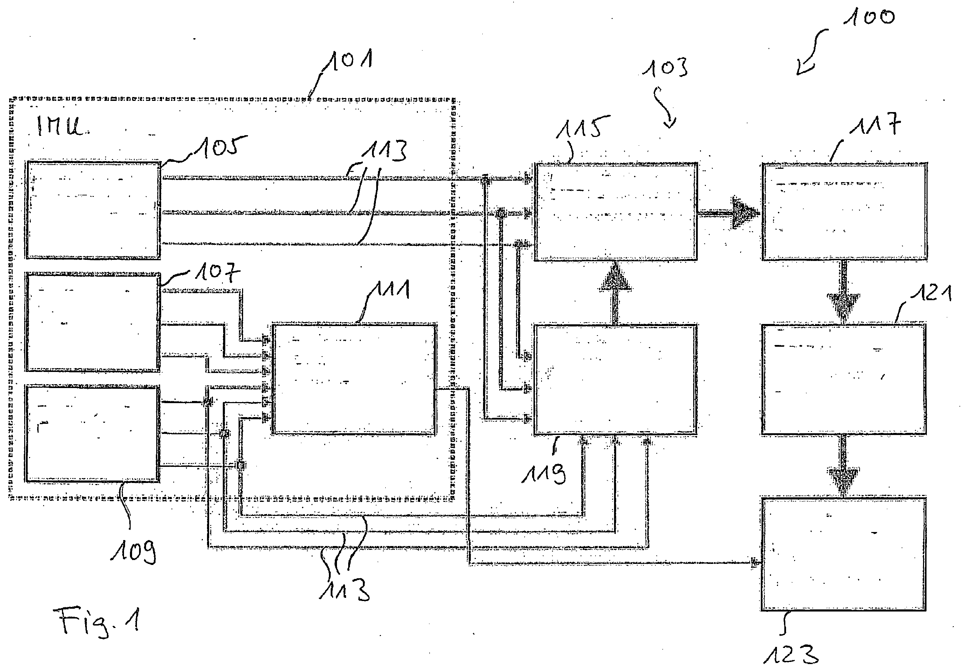

Fig. 1 schematically shows a system 100 for determining a coordinate of an object according to an embodiment. The system 100 comprises an inertial sensor 101 and a processing system 103. The inertial sensor 101 may also be referred to as an inertial measurement unit (IMU). The system 100 for determining a coordinate of an object is a so-called dead reckoning system which is adapted to autonomously determine the coordinate of the object without requiring external facilities such as a satellite which is a requirement of the global positioning system (GPS).

According to an embodiment the system 100 is a small device (of the order of 10 cm by 10 cm by 5 cm or even smaller) which may be carried by a pedestrian, e.g. mounted at a foot of the pedestrian. The inertial measurement unit 101 comprises three acceleration sensors 105 for measuring accelerations in three different directions, such as in the x-direction, in the y-direction and in the z-direction. In particular, the inertial sensor 101 may comprise a low cost micro electromechanical system (MEMS) sensor. The inertial sensor 101 further comprises three orthogonal magnetometers 107 for measuring the direction of the magnetic field of the earth. Further, the inertial sensor 101 comprises three orthogonal gyroscopes 109 for measuring changes in the orientation of the object. Measuring data acquired by the magnetometers 107 and the gyroscopes 109 are supplied to a stabilizing unit 111 for correction and stabilization of the measured data.

The acceleration data and the orientation data acquired by the inertial sensor 101 are supplied to the processing system 103 via data lines 113. The processing system 103 performs processing of the data, such as coordinate transformation 115, subtraction of gravitation 117, motion recognition 119. Further, the processing system comprises a processing module 121 for determining the velocities of the object, in particular the pedestrian, carrying the system for determining a coordinate 100.

Within the processing module 121 the determination of the velocities of the object comprises integrating the measured accelerations over time. As the acceleration sensor 105 measures the accelerations at a frequency of 100 Hz the integration is performed by a discrete summation of the measured accelerations.

As the measurement of the accelerations is error-prone also the determination of the velocities of the object is inaccurate unless the velocities are regularly corrected, in particular unless expected zero velocity states are identified followed by an according correction of the velocity. In particular, zero velocity states (these are states of movement of the object or the pedestrian, wherein the velocity of the object in a local inertial system at the surface of the earth is below a predetermined threshold, in particular below 0.05 m/s, 0.01 m/s or even smaller) are identified for correction of the velocities. If these corrections were not performed, the determination of the coordinates from the velocities would be largely inaccurate as well.

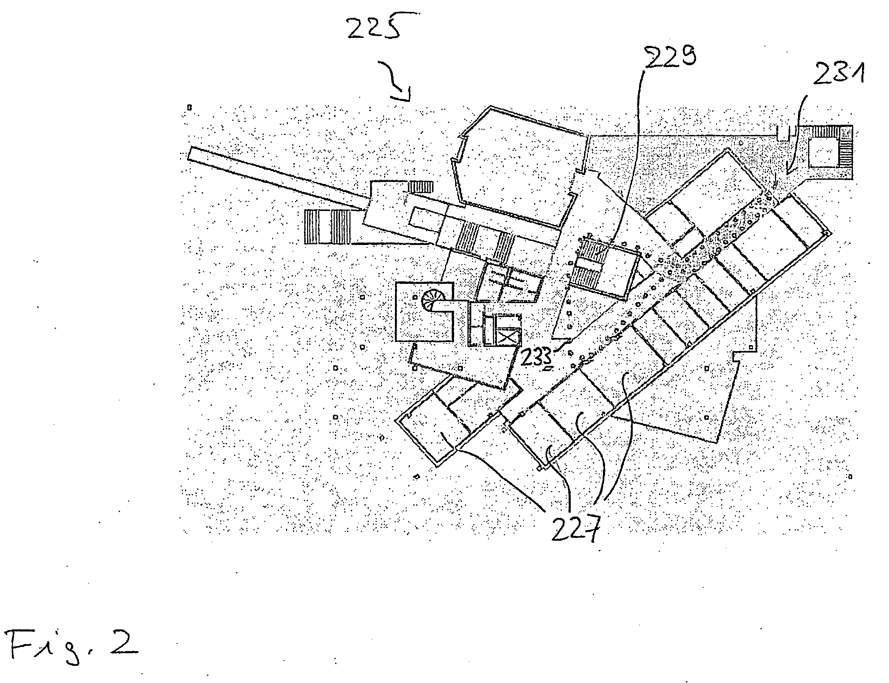

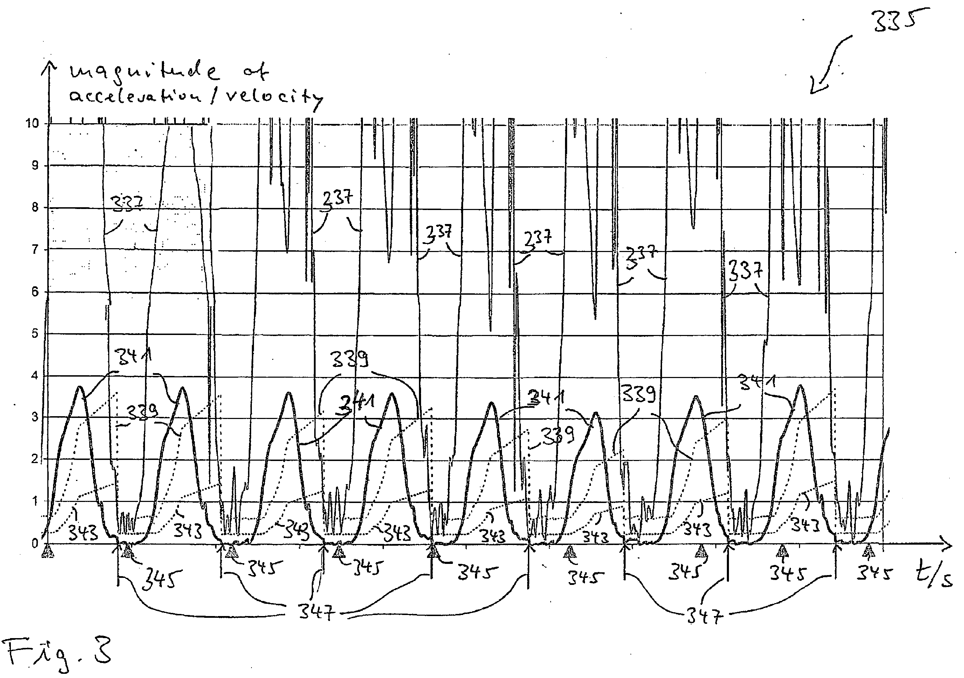

Therefore, the processing module 121 performs a method for determining a zero velocity state of the object based on the measured accelerations. This method is described in more detail with reference to Figs. 2 and 3 below.

Having determined that the object is in a zero velocity state, the velocities originally derived from the measured accelerations are accordingly corrected (set to zero for instances in time for which a zero velocity state has been determined). The thus corrected velocities then form the basis for the calculation of the coordinates by the processing module 123 using an integration algorithm. It should be noted that the measuring the accelerations, correcting the velocities derived from the measured accelerations and calculation of the coordinates from the corrected velocities is entirely performed within the system 100 for determining a coordinate of an object without requiring performing the correction by an external facility.

The system 100 may further comprise a (not illustrated) transmitter (and/or receiver) module for transmitting the coordinates calculated by the processing module 123 to a base station tracking the motion of the object. Thereby, only the finally calculated coordinates may be transmitted to the base station without the need to transmit plural accelerations measured over a time period to the base station. Thereby, the amount of data to be transmitted to the base station may be reduced.

Body-mounted inertial measurement units (IMUs) may allow for indoor positioning without preinstalled infrastructure. Beginning at a defined starting point in the building or somewhere in its surrounding the movements of a person may be tracked by numerical double integration of the sensor's accelerations in three local directions. Transforming the local paths into the global system the current position may be determined. At the moment the indoor positioning system (IPS), developed at Graz University of Technology is designed as core component of a computer aided disaster management system (CADMS). The advances in technology of mobile and smart phones (e.g. integration of inertial sensors) may allow using the system in everyday applications (e.g. navigation in large underground structures, shopping centres, airports, etc.).

Unfortunately over time the measurement errors of such a conventional IPS may grow and the exact position cannot be calculated relying on a permanent integration. The positioning precision may be improved by the technique of so called "zero velocity updates", i.e. the integration may be performed only within short interval(s), where the velocity of the IMU is not zero. So the precision problem may be reduced to identify zero velocity states. To get periodical moments of zero velocity, the IMU may be mounted e.g. at the foot.

Unfortunately the detection of real zero velocity states may not be reliable in conventional systems. Even within the short time of about 1 second for one footstep, noise and drift of the IMU may be considerable, furthermore field test have shown that the precision in detecting zero velocity states, also depends on the movement type and equipment of the moving person.

Therefore, specialised algorithms analysing the movement patterns (walking, running, crawling, ascending or descending stairs) have been developed. They improve the pure integration significantly, because typical effects of IMUs like noise and drift may be suppressed or corrected, as well as the characteristics of the movement type may be taken into account.

Fig. 2 shows a floor plan 225 showing a plan view of a floor comprising plural rooms 227, stairways 229 and a corridor 231. The dotted line 233 indicates a travelling path of a pedestrian walking through the corridor 231 and around the stairways 229. The pedestrian travelling along the path 233 carries a system for determining a coordinate 100, as illustrated in Fig. 1. The system for determining a coordinate of an object measures the accelerations of the pedestrian walking along the path 233, determines the velocities from the measured accelerations, corrects the velocities as described below and derives the coordinates from the corrected velocities. Finally, the calculated coordinates may be sent (e.g. transmitted by wireless communication) to a not illustrated base station. Thereby, the base station may track the position of the pedestrian walking along the path 233 and may send information back to the pedestrian to guide him through the building in particular in an emergency situation where sight might be hampered.

The algorithm for determining a zero velocity state is time and movement type dependent and allows for the detection of zero velocity states for any movement type during a long time. The algorithm is fully parameterized, so it can be adapted to special environment conditions (e.g. ground floor material, equipment or anatomy of the user).

According to an embodiment a zero velocity state (the velocity of the object is below a predetermined threshold, such as below 0.01 m/s, below 0.005 m/s, or is substantially 0) is determined, if at least a first criterion or a second criterion based on a derived information indicative of a plurality of velocities of the object is satisfied.

Herein, the first criterion (C1) is defined as:

$$\left( a_{s(t)} = a_{s(\min)} \wedge \left| v_{s(t)} - v_{s(\min)} \right| < \Delta v * f_v \wedge v_{s(t)} < v_f \wedge a_{s(t-1)} > a_{s(t)} \right)$$

and the second criterion (C2) is defined as:

$$\left( v_{s(t)} = v_{s(\min)} \wedge a_{s(t)} < a_f \right)$$

Thereby, the following nomenclature is used:

$$a_{s(t)} = \left| \sum_{t}^{t+n \cdot dt} a_{s(t)} / n \right| = \text{Norm of average of the acceleration in the direction}$$

of motion at the time t in the interval t to t+n•dt

n = number of chosen average values of the acceleration in the direction of motion
dt = integration time interval
$a_{s(\min)}$ = norm of minimum of the acceleration in the direction of motion in the interval t to t+m•dt.
m = number of subsequent accelerations in the direction of motion from which a minimum is determined
$v_{s(t)}$ = norm of velocity in the direction of motion at time t
$v_{s(\min)}$ = norm of minimum of the velocity in the direction of motion in the interval t to t+m•dt
$\Delta v$ = tolerance value for the maximal, norm of velocity in the zero velocity range

$$f_v = A * v_{\max}^3 + B * v_{\max} + C = \text{a factor}$$

$v_{\max}$ = maximal velocity since the last zero velocity state
A,B,C = factors evaluated from experiments performed for different motion patterns
$v_f = \Delta v * f_v * (1 + \Delta t)$ = tolerance value for the maximal norm of average velocity in the zero velocity region
$\Delta t$ = time since the last zero velocity state
$a_f = \Delta a * f_v * (1 + \Delta t)$ = tolerance value for the maximal norm of average acceleration in the zero velocity region

The criterion (denoted as C*) is determined by combining the first criterion (C1) and the second criterion (C2) by a logical OR. Thus, it is determined that the object is in a zero velocity state, if at least one of the first criterion or the second criterion is satisfied. The first criterion as well as the second criterion each comprises a number of sub-criteria which are connected by a logical AND. Thus, the first criterion is satisfied, if all of the sub-criteria of the first criterion are satisfied and the second criterion is satisfied, if all of the sub-criteria of the second criterion are satisfied.

In other embodiments the first criterion may comprise at least one of the sub-criteria of the first criterion, but not all. According to an embodiment the second criterion may comprise at least one of the sub-criteria of the second criterion, but not all.

$a_{s(t)}$ is the norm of an average of the measured accelerations, wherein the average is formed over n measured accelerations. According to an embodiment n is between 2 and 8, in particular between 3 and 5, in particular 4.

dt denotes the time interval between two subsequent measurements of the acceleration. According to an embodiment dt is between 1/1000 s and 1/10 s, in particular around 1/100 s. The averaging the measured acceleration may smooth the acceleration in order to reduce outlier spikes and unrealistic peaks of the acceleration.

$a_{s(\min)}$ denotes the norm of the minimum of the acceleration within the interval t to t+m•dt. Thereby, the time interval m•dt denotes the time interval after the time t in which measured accelerations are taken into account in order to determine whether the object is in a zero velocity state. Thus, the algorithm looks ahead of the time point t to decide whether at time t the object is in a zero velocity state.

According to an embodiment m is between 10 and 60, in particular 30 - 50, in particular around 40. Further, according to an embodiment, the product m•dt is chosen such that it is less than a cycle period of an expected motion pattern of the object. For example, if the motion pattern is walking the cycle period of this motion pattern may be defined as the time period between two footsteps. According to an embodiment the product m•dt is less than 0.5, in particular less than 0.3, times the cycle period of the motion pattern. If the object is expected to move according to a number of different motion patterns the product m•dt may be chosen and set such that the product is less than the smallest cycle period of the expected motion patterns.

$v_{s(min)}$ is the norm of the minimum of the velocity within the interval t to t+m•dt. According to the second criterion (C2), if the velocity $v_{s(t)}$ at time t equals this minimum the algorithm will determine that the object is in a zero velocity state, if further the acceleration $a_{s(t)}$ is less than a threshold $a_f$ which depends on the time since the last determination of a zero velocity state and which also depends on the maximal velocity since the last zero velocity state.

Further, the first criterion comprises the sub-criteria that the acceleration $a_{s(t)}$ equals the minimum of the acceleration within the interval t to t+m•dt denoted as $a_{s(min)}$ and further the sub-criteria that the velocity $v_{s(t)}$ at time t is less than a velocity threshold $v_f$ which is dependent on the maximal velocity since the last determination of a zero velocity state and which also depends on the time since the last zero velocity state as the acceleration threshold $a_f$

Further, the acceleration threshold $a_f$ as well as the velocity threshold $v_f$ both increase with increasing maximal velocity since the last zero velocity state according to a polynomial of third order as expressed by the factor $f_v$. By this dependency a number of different motion patterns like walking, running, ascending, descending or crawling may be modelled by a universal equation. The coefficients A, B and C may be learnt by evaluating training data providing accelerations as well as actual zero velocity states. Further, by the time dependence of the velocity threshold $v_f$ and the acceleration threshold $a_f$ expected cycle periods of different motion patterns may be taken into account, thereby relaxing the requirements (increasing the thresholds) as the time since the last zero velocity state increases.

In summary, according to an embodiment a zero velocity state is determined, if at least one of the first criterion C1 and the second criterion C2 is satisfied. The first criterion C1 contains four subconditions, which must be satisfied simultaneously at time t:

First subcondition of criterion C1: $a_{s(t)} = a_{s(min)}$

The absolute value ($a_{s(t)}$) of the acceleration in direction of the movement at the time t, formed from n subsequently measured accelerations, has to be a minimum ($a_{s(min)}$). The minimum is derived within a range of m subsequent averages of accelerations. Typical values (for a measuring frequency of 100 Hz) for n lie between 3 and 5, typical values for m lie between 20 and 40.

Second subcondition of criterion C1: $|v_{s(t)} - v_{s(min)}| < \Delta v^* f_v$

The absolute value of the difference of the absolute value of the velocity in direction of motion at time t ($v_{s(t)}$) and the absolute value of the minimal velocity ($v_{s(min)}$) in a range of m subsequent velocities has to be smaller than a variable ($f_v$) tolerance value ($\Delta v$). $f_v$ is calculated according to the equation $f_v = A^* v^3_{max} + B^* v_{max} + C$. The maximal velocity $v_{max}$ thereby is an absolute value of the maximal velocity since the last zero velocity update. The parameters A, B, C may be determined from experiments. They depend on the typical motion pattern of the sensor carrier (the person carrying the sensor), the measuring accuracy, the soil conditions, etc. It is important to select them such that a spectrum of motion patterns as broad as possible (ideally all motion patterns) is covered (i.e. can be recognized or treated using the algorithm).

Third subcondition of criterion C1: $v_{s(t)} < v_f$

The absolute value of the velocity in direction of motion at time t ($v_{s(t)}$) has to be smaller than a variable ($f_v^*$ (1+$\Delta t$)) tolerance value ($\Delta v$). $f_v$ is calculated as in the former subcondition, except that the factor is now multiplied with a time dependent parameter (l+$\Delta t$). $\Delta t$ is the time (in seconds) since the last zero velocity state.

Fourth subcondition of criterion C1: $a_{s(t-1)} > a_{s(t)}$

The absolute value ($a_{s(t-1)}$ of the average of the accelerations in direction of motion at time (t-1), formed from n subsequently measured acceleration is greater than the acceleration at time t($a_{s(t)}$).

The second criterion C2 contains two subconditions which must be simultaneously satisfied at time t.

First subcondition of criterion C2: $v_{s(t)} = v_{s(min)}$

The absolute value of the velocity in direction of motion at time t ($v_{s(t)}$) has to be a minimum ($v_{s(min)}$). The minimum is derived within a range of m subsequent absolute values of velocities. Thereby, m is identical to the value m used in the first and second subcondtions or criterion C1.

Second subcondition of criterion C2: $a_{s(t)} < a_f$

The absolute value ($a_{s(t)}$) of the average of the accelerations in direction of motion at time t, formed from n subsequently measured accelerations, has to be smaller than a variable ($f_v^*(1+\Delta t)$ tolerance value ($\Delta a$). $f_v^*(1 + \Delta t)$ corresponds to the factor used in the third subcondition of criterion C1.

In other embodiments one of more subconditions of the first criterion C1 and/or the second criterion C2 may be (slightly) altered or may even be omitted.

Fig. 3 illustrates a graph 335 illustrating measured accelerations and determined velocities along the path 233 illustrated in Fig. 2 along which the pedestrian walks. The x-axis denotes the time t in seconds s and the y-axis denotes magnitude of accelerations and velocities in arbitrary units.

The curve 337 denotes the acceleration measured by the system 100 illustrated in Fig. 1 which is carried by the pedestrian walking along the path 233 illustrated in Fig. 2. As can be observed, the measured acceleration 337 exhibits strong varying values comprising a number of fluctuating peaks. The dotted curve 339 denotes the acceleration threshold $a_f$. The curve 341 denotes the corrected velocity, wherein the velocity was set to zero, if a zero velocity state has been determined according to one of criterion C1 or criterion C2 (or both) defined above. The curve 343 denotes the velocity threshold $v_f$ according to the equation above. The triangles 345 denote points in time where the pedestrian had one foot at the ground which therefore correspond to the states where the velocity of the pedestrian is actually zero.

The zero velocity states determined solely based on the measured accelerations determined according to the criterion C* are denoted by reference sign 347. At these instances the velocity threshold $v_f$ (curve 343) as well as the acceleration threshold $a_f$ (curve 339) are reset (reduced) to low values, because at these instances in time the time since the last determination of a zero velocity state is zero such that the quantity $\Delta t$ in equations for $v_f$ and $a_f$ above is zero. Further, at these instance of time 347 the velocity 341 is set to zero.

To the right of the instances 347 (zero velocity states determined according to criterion C*) the velocity threshold $v_f$ (curve 343) as well as the acceleration threshold $a_f$ (curve 339) both increase as the time since the last zero velocity state increases and as the velocity 341 increases. Thus, it becomes more and more probable that the measured acceleration 337 falls below the threshold 339 and that the velocity 341 falls below the threshold 343. Thus, it becomes more and more probable that one of the criteria C1 or C2 is satisfied.

As can be observed from Fig. 3, the instances in time 347 which are determined as zero velocity states according to the criterion C* only slightly deviate from the instances in time 345 where the pedestrian actually was in a zero velocity state according to manual determination. The time difference between predicted instances and actual instances of a zero velocity state is below 0.2 s. Further, for each actual zero velocity state also a zero velocity state determined according to the criterion C* can be associated. Thus, the algorithm according to this embodiment does not miss any step of the pedestrian walking along the path 233 illustrated in Fig. 2.

Thus, the algorithm of the determination of the velocities according to the criterion C* performs very well for the motion pattern of walking. Similar results were achieved for other walking patterns, such as ascending, descending, running, or crawling. The good performance at different motion patterns may be attributed to the form of the factor $f_v$ taking into account a typical velocity, such as the maximum velocity, of each motion pattern. Thereby, a context sensitivity of the method may be achieved.

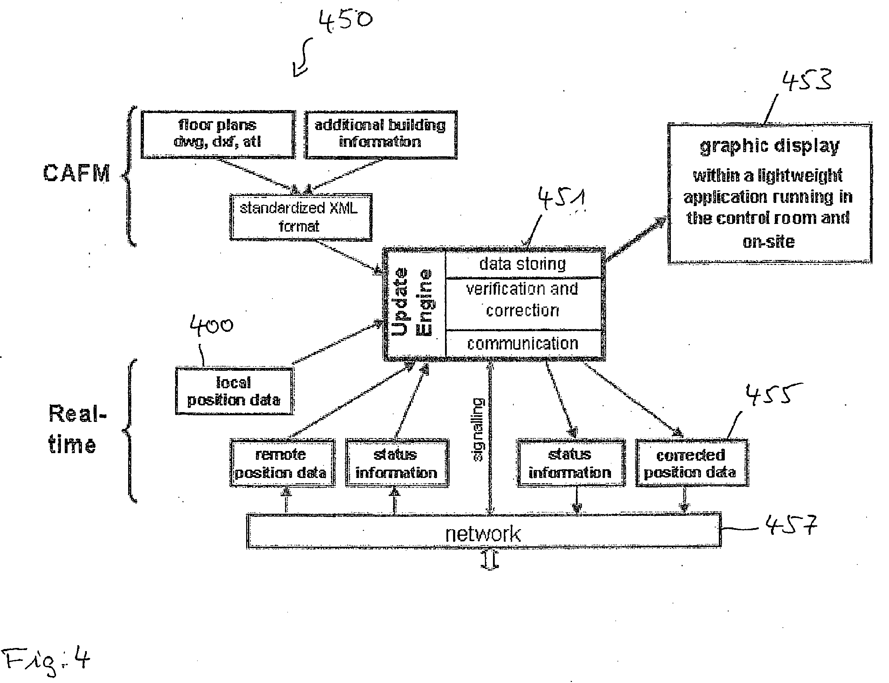

Fig. 4 schematically illustrates a computer-aided disaster management system (CADMS) in which a system for determining a coordinate according to an embodiment may be used. The CADMS comprises a computer-aided facility management (CAFM) including floor plans and additional building information in a standardized XML format. Further, the system comprises a system 400 for determining a coordinate of an object which may be constructed similar to the embodiment 100 illustrated in Fig. 1. Further, the CADMS comprises an update engine 451 for receiving data from the CAFM 450 as well as from the system 400 for determining a coordinate of an object. The update engine manages all data and may send navigation data to a graphics display 453 which may be carried by the pedestrian to be guided through a disaster area.

Further, the system 400 for determining a coordinate of an object may exchange the coordinate data with the update engine 451 which may check the determined coordinates and evaluate their plausibility. Depending on the plausibility the update engine may correct the coordinate data delivered by the system 400 for determining a coordinate of an object and send the corrected coordinates back to the system 400 illustrated in Fig. 4.

The graphics display 453 may for example comprise a head-mounted display which is carried by the pedestrian, such as a fire fighter during the emergency operation. Further, the update engine 451 is connected to different data sources 455 and is also connected to a network 457 for transferring different kinds of information to a central server or a number of computers.

The CADMS illustrated in Fig. 4 may for example be utilized during military actions in urban areas or during natural catastrophes, fire and terror attacks, in which cases emergency personnel may need to be guided through a building or in general through a (obscured) disaster area. In particular, in these disaster areas a satellite communication may not be possible excluding the global positioning system for navigation. Further, the CADMS system illustrated in Fig. 4 may also be used for guiding or navigating pedestrians within urban sites, in particular during emergency situations. As an interface for the emergency personnel carrying the graphics display 453 a touch screen, a body computer interface (BIC) or the like may be employed.

The method for determining a coordinate of an object was evaluated in a number of experiments. Test trails having a length of more than 6 km in buildings with different construction characteristics and functions were used as test paths. The results, in combination with map matching algorithms, resulted in an accuracy of 1-2 m in the determination of the positions in buildings up to 95%. A particular challenge is met by the method and system according to an embodiment, since all calculations may be performed in real-time and only a low amount of data (the actual accurately determined coordinates of the object) must be sent to a base station or an update engine. The algorithm may for example be implemented within a smart phone which provides sufficient calculation capacity.

The methods and systems described above may in particular be applied when an inertial measurement unit is mounted at a foot of a pedestrian, since in this case the occurrence of an actual zero velocity state is expected whenever the pedestrian uses his feet for movement. However, the methods and systems may be adapted to be also applicable to cases where the inertial measurement unit is carried at other body parts of the human.

Reference signs

100,400 System for determining a coordinate of an object
101 Inertial sensor
103 Processing system
105 Acceleration sensor
107 Magnetometer
109 Gyroscope
111 Stabilization module
113 Data lines
115 Coordinate transformation
117 Gravitation subtraction
119 Motion recognition
121 Velocity determination
123 Coordinate calculation
225 Floor plan
227 Room
229 Stairways
231 Corridor
233 Travelling path of pedestrian
335 Graph of experimental and derived quantities
337 Measured acceleration
339 Acceleration threshold
341 Velocity, corrected according to an embodiment
343 Velocity threshold
345 Manually determined zero velocity states
347 Zero velocity states determined according to an embodiment
450 CAFM
451 Update engine
453 Graphics display
455 Additional data sources
457 Network

**Claims**

1. A method for determining whether a velocity of an object is below a predetermined threshold value, the method comprising:

   measuring a plurality of accelerations (337) of the object within a time interval (m*dt) from a point in time (t) to a later point in time (t + m*dt); **characterized in that** the method further comprises:
   deriving information indicative of a plurality of velocities (341) of the object within the time interval based on the measured accelerations; and
   determining whether the velocity is below the predetermined threshold value at the point in time by applying a criterion (C*) based on the derived information indicative of the plurality of the velocities.

2. The method according to claim 1, wherein the criterion comprises a factor ($f_v$) depending on a quantity indicative of the velocities, in particular a maximum of the velocities, since a last determination that the velocity of the object is below the predetermined threshold value.

3. The method according to claim 2, wherein the factor increases when the quantity indicative of the velocities, in particular the maximum of the velocities, increases.

4. The method according to claim 3, wherein the factor increases when the maximum of the velocity increases according to a polynomial, in particular a polynomial of third order.

5. The method according to one of the claims 2 to 4, wherein a form of the dependency of the factor on the maximum velocity is determined such that the determination that the velocity of the object is below the predetermined threshold value is refined, when the object moves according to a predefined motion pattern.

6. The method according to one of the claims 2 to 5, wherein the criterion is satisfied if a first criterion (C1) or a second criterion (C2) is satisfied.

7. The method according to claim 6, wherein the first criterion comprises a determination whether the acceleration at the point in time is below an acceleration threshold ($a_f$).

8. The method according to claim 6 or 7, wherein the first criterion comprises a determination whether the velocity at the point in time is smaller than a product of
the factor,
a quantity depending on a time period since the last determination that
the velocity of the object is below the predetermined threshold value, and
a velocity tolerance value ($\Delta v$).

9. The method according to one of the claims 6 to 8, wherein the second criterion comprises a determination whether the velocity at the point in time is below a velocity threshold ($v_f$).

10. The method according to one of the claims 6 to 9, wherein the second criterion comprises a determination whether the measured acceleration at the point in time is smaller than a product of
the factor,
a quantity depending on a time period since the last determination that the velocity of the object is below the predetermined threshold value, and
an acceleration tolerance value ($\Delta a$).

11. The method according to claim 8 or 10, wherein the quantity depends linearly on the time period since the last determination that the velocity of the object is below the predetermined threshold value.

12. The method according to one of the claims 1 to 11, wherein the measuring the plurality of accelerations of the object within the time interval from the point in time to the later point in time comprises measuring the accelerations at a frequency between 50 Hz and 200 Hz, in particular between 70 Hz and 150 Hz.

13. The method according to one of the claims 1 to 12, wherein the measuring the plurality of accelerations of the object within the time interval from the point in time to the later point in time comprises measuring 20 to 60 accelerations, in particular 30 to 50 accelerations.

14. A method for determining a coordinate of an object, the method comprising:

determining whether a velocity of the object is below a predetermined threshold value according to the method of one of claims 1 to 13; and
deriving the coordinate of the object based on the determining whether the velocity of the object is below the predetermined threshold value and based on the measured acceleration at the point in time.

15. An apparatus for determining whether a velocity of an object is below a predetermined threshold value, the apparatus comprising:

an inertial sensor (101) adapted
for measuring a plurality of accelerations of the object within a time interval from a point in time to a later point in time; and
a processing system (103);
**characterized in that** the processing system is adapted

for deriving information indicative of a plurality of velocities of the object within the time interval based on the measured accelerations, and
for determining whether the velocity is below the predetermined threshold value at the point in time based by applying a criterion based on the derived information indicative of the plurality of the velocities.

**Patentansprüche**

1. Ein Verfahren zum Ermitteln, ob eine Geschwindigkeit von einem Objekt unterhalb eines vorgegebenen Schwellenwertes ist, wobei das Verfahren aufweist:

   das Messen von einer Vielzahl von Beschleunigungen (337) des Objekts innerhalb eines Zeitintervalls (m*dt) von einem Zeitpunkt (t) zu einem späteren Zeitpunkt (t + m*dt);
   **dadurch gekennzeichnet, dass** das Verfahren ferner aufweist:

   das Ableiten von Informationen, die für eine Vielzahl von Geschwindigkeiten (341) des Objekts innerhalb des Zeitintervalls indikativ sind, basierend auf den gemessenen Beschleunigungen; und
   das Ermitteln, ob die Geschwindigkeit zu dem Zeitpunkt unterhalb des vorgegebenen Schwellenwertes ist, mittels Anwenden eines Kriteriums (C*) basierend auf den abgeleiteten Informationen, die für die Vielzahl von Geschwindigkeiten indikativ sind.

2. Das Verfahren gemäß Anspruch 1, wobei das Kriterium einen Faktor ($f_v$) aufweist, der von einer für die Geschwindigkeiten indikativen Quantität abhängt, insbesondere ein Maximum der Geschwindigkeiten, seit einer letzten Ermittlung, dass die Geschwindigkeit des Objekts unterhalb des vorgegebenen Schwellenwertes ist.

3. Das Verfahren gemäß Anspruch 2, wobei der Faktor ansteigt, wenn die für die Geschwindigkeiten indikative Quantität, insbesondere das Maximum der Geschwindigkeiten, ansteigt.

4. Das Verfahren gemäß Anspruch 3, wobei der Faktor ansteigt, wenn das Maximum der Geschwindigkeiten gemäß einem Polynom ansteigt, insbesondere einem Polynom dritter Ordnung.

5. Das Verfahren gemäß einem der Ansprüche 2 bis 4, wobei eine Form der Abhängigkeit des Faktors von der maximalen Geschwindigkeit so ermittelt wird, dass die Ermittlung, dass die Geschwindigkeit des Objekts unterhalb des vorgegebenen Schwellenwertes ist, verfeinert wird, wenn das Objekts sich gemäß einem vorgegebenen Bewegungsmuster bewegt.

6. Das Verfahren gemäß einem der Ansprüche 2 bis 5, wobei das Kriterium erfüllt ist, falls ein erstes Kriterium (C1) oder ein zweites Kriterium (C2) erfüllt ist.

7. Das Verfahren gemäß Anspruch 6, wobei das erste Kriterium eine Ermittlung aufweist, ob die Beschleunigung zu dem Zeitpunkt unterhalb einer Beschleunigungsschwelle ($a_f$) ist.

8. Das Verfahren gemäß Anspruch 6 oder 7, wobei das erste Kriterium eine Ermittlung aufweist, ob die Geschwindigkeit zu dem Zeitpunkt kleiner ist als ein Produkt aus
   dem Faktor,
   einer Quantität, die von einer Zeitperiode seit der letzten Ermittlung, dass die Geschwindigkeit des Objekts unterhalb des vorgegebenen Schwellenwertes ist, abhängig ist und
   einem Geschwindigkeitstoleranzwert ($\Delta v$).

9. Das Verfahren gemäß einem der Ansprüche 6 bis 8, wobei das zweite Kriterium eine Ermittlung aufweist, ob die Geschwindigkeit zu dem Zeitpunkt unterhalb einer Geschwindigkeitsschwelle ($v_f$) ist.

10. Das Verfahren gemäß einem der Ansprüche 6 bis 9, wobei das zweite Kriterium eine Ermittlung aufweist, ob die gemessene Beschleunigung zu dem Zeitpunkt kleiner ist als ein Produkt aus
    dem Faktor,
    einer Quantität, die von einer Zeitperiode seit der letzten Ermittlung, dass die Geschwindigkeit des Objekts unterhalb des vorgegebenen Schwellenwertes ist, abhängig ist und
    einem Beschleunigungstoleranzwert ($\Delta a$).

**11.** Das Verfahren gemäß Anspruch 8 oder 10, wobei die Quantität linear von der Zeitperiode seit der letzten Ermittlung, dass die Geschwindigkeit des Objekts unterhalb des vorgegebenen Schwellenwertes ist, abhängt.

**12.** Das Verfahren gemäß einem der Ansprüche 1 bis 11, wobei das Messen der Vielzahl von Beschleunigungen des Objekts innerhalb des Zeitintervalls von dem Zeitpunkt zu dem späteren Zeitpunkt ein Messen der Beschleunigungen bei einer Frequenz zwischen 50 Hz und 200 Hz, insbesondere zwischen 70 Hz und 150 Hz, aufweist.

**13.** Das Verfahren gemäß einem der Ansprüche 1 bis 12, wobei das Messen der Vielzahl von Beschleunigungen des Objekts innerhalb des Zeitintervalls von dem Zeitpunkt zu dem späteren Zeitpunkt ein Messen von 20 bis 60 Beschleunigungen, insbesondere 30 bis 50 Beschleunigungen, aufweist.

**14.** Ein Verfahren zum Ermitteln einer Koordinate von einem Objekt, wobei das Verfahren aufweist:

das Ermitteln, ob eine Geschwindigkeit von dem Objekt unterhalb eines vorgegebenen Schwellenwertes ist, gemäß dem Verfahren einer der Ansprüche 1 bis 13; und
das Ableiten der Koordinate von dem Objekt basierend auf der Ermittlung, ob die Geschwindigkeit des Objekts unterhalb des vorgegebenen Schwellenwertes ist und basierend auf der gemessenen Beschleunigung zu dem Zeitpunkt.

**15.** Ein Gerät zum Ermitteln, ob eine Geschwindigkeit von einem Objekt unterhalb eines vorgegebenen Schwellenwertes ist, wobei das Gerät aufweist:

einen Trägheitssensor (101), geeignet für das Messen von einer Vielzahl von Beschleunigungen des Objekts innerhalb eines Zeitintervalls von einem Zeitpunkt zu einem späteren Zeitpunkt; und
ein Prozessorsystem (103);
**dadurch gekennzeichnet dass**, das Prozessorsystem geeignet ist für
das Ableiten von Informationen, die für eine Vielzahl von Geschwindigkeiten des Objekts innerhalb des Zeitintervalls indikativ sind, basierend auf den gemessenen Beschleunigungen, und
das Ermitteln, ob die Geschwindigkeit zu dem Zeitpunkt unterhalb des vorgegebenen Schwellenwertes ist, mittels Anwendens eines Kriteriums basierend auf den abgeleiteten Informationen, die für die Vielzahl von Geschwindigkeiten indikativ sind.

**Revendications**

**1.** Procédé pour déterminer si une vitesse d'un objet est inférieure à une valeur seuil prédéfinie, le procédé comprenant :

la mesure d'une pluralité d'accélérations (337) de l'objet dans un intervalle de temps (m*dt) d'un moment défini (t) à un moment ultérieur défini (t + m*dt) ; **caractérisé par le fait que** le procédé comprend en outre :

la dérivation d'informations indicatives d'une pluralité de vitesses (341) de l'objet dans l'intervalle de temps basée sur les accélérations mesurées ; et
la détermination si la vitesse est inférieure à la valeur seuil prédéfinie au moment défini en appliquant un critère (C*) basé sur les informations dérivées indicatives de la pluralité des vitesses.

**2.** Procédé selon la revendication 1, en quoi le critère comprend un facteur ($f_v$) dépendant d'une quantité indicative des vitesses, en particulier un maximum des vitesses, depuis une dernière détermination que la vitesse de l'objet est inférieure à la valeur seuil prédéfinie.

**3.** Procédé selon la revendication 2, en quoi le facteur augmente lorsque la quantité indicative des vitesses, en particulier le maximum des vitesses, augmente.

**4.** Procédé selon la revendication 3, en quoi le facteur augmente lorsque le maximum de la vitesse augmente selon un polynôme, en particulier un polynôme de troisième ordre.

**5.** Procédé selon une des revendications 2 à 4, en quoi une forme de dépendance du facteur de la vitesse maximum est déterminée de sorte que la détermination que la vitesse de l'objet est inférieure à la valeur seuil prédéfinie soit affinée, lorsque l'objet bouge selon un modèle de mouvement prédéfini.

**6.** Procédé selon une des revendications 2 à 5, en quoi le critère est satisfait si un premier critère (C1) ou un second critère (C2) est satisfait.

**7.** Procédé selon la revendication 6, en quoi le premier critère comprend une détermination si l'accélération au moment défini est inférieure à un seuil d'accélération ($a_f$).

**8.** Procédé selon la revendication 6 ou 7, en quoi le premier critère comprend une détermination si la vitesse au moment défini est inférieure à un produit résultant
du facteur,
d'une quantité dépendant d'une période depuis la dernière détermination que la vitesse de l'objet est inférieure à la valeur seuil prédéfinie, et
d'une valeur de tolérance de vitesse ($\Delta v$).

**9.** Procédé selon une des revendications 6 à 8, en quoi le second critère comprend une détermination si la vitesse au moment défini est inférieure à un seuil de vitesse ($v_f$).

**10.** Procédé selon une des revendications 6 à 9, en quoi le second critère comprend une détermination si l'accélération mesurée au moment défini est inférieure à un produit résultant
du facteur,
d'une quantité dépendant d'une période depuis la dernière détermination que la vitesse de l'objet est inférieure à la valeur seuil prédéfinie, et
d'une valeur de tolérance d'accélération ($\Delta a$).

**11.** Procédé selon la revendication 8 ou 10, en quoi la quantité dépend linéairement de la période depuis la dernière détermination que la vitesse de l'objet est inférieure à la valeur seuil prédéfinie.

**12.** Procédé selon une des revendications 1 à 11, en quoi la mesure de la pluralité d'accélérations de l'objet dans l'intervalle de temps du moment défini au moment ultérieur défini comprend la mesure des accélérations à une fréquence entre 50 Hz et 200 Hz, en particulier entre 70 Hz et 150 Hz.

**13.** Procédé selon une des revendications 1 à 12, dans lequel la mesure de la pluralité d'accélérations de l'objet dans l'intervalle de temps du moment défini au moment ultérieur défini comprend la mesure de 20 à 60 accélérations, en particulier 30 à 50 accélérations.

**14.** Procédé pour déterminer une coordonnée d'un objet, le procédé comprenant :

la détermination si une vitesse de l'objet est inférieure à une valeur seuil prédéfinie selon le procédé d'une des revendications 1 à 13 ; et
la dérivation de la coordonnée de l'objet basée sur la détermination si la vitesse de l'objet est inférieure à la valeur seuil prédéfinie et basée sur l'accélération mesurée au moment défini.

**15.** Appareil pour déterminer si une vitesse d'un objet est inférieure à une valeur seuil prédéfinie, l'appareil comprenant :

un capteur inertiel (101) adapté pour mesurer une pluralité d'accélérations de l'objet dans un intervalle de temps d'un moment défini à un moment ultérieur défini; et
un système de traitement (103) ;
**caractérisé par le fait que** le système de traitement est adapté
pour dériver des informations indicatives d'une pluralité de vitesses de l'objet dans l'intervalle de temps basé sur les accélérations mesurées, et
pour déterminer si la vitesse est inférieure à la valeur seuil prédéfinie au moment défini en appliquant un critère basé sur les informations dérivées indicatives de la pluralité des vitesses.

Fig. 1

Fig. 2

Fig. 3

Fig. 4

EP 2 386 828 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOME ; TOME P ; BONZON F. ; MERMINOD B. ; AMINIAN K. et al.** Improving pedestrian dynamics modelling using fuzzy logic. *PFL Geodetic Engineering LAB and EPFL Laboratory of Movement Analysis and Measurement*
- **KWAKKEL et al.** Foot and Ankle Kinematics During Gait Using Foot Mounted Inertial System. *ION NTM, San Diego CA,* 22 January 2007
- **YUN X. ; BACHMANN E. R. ; MOORE H. ; CALUSDIAN J.** Self-contained Position Tracking of Human Movement Using Small Inertial/Magnetic Sensor Modules. *Proceedings of IEEE International Conference on Robotics and Automation, Roma, Italy,* 10 April 2007

- **A.R.JIMENEZ et al.** A comparison of Pedestrian Dead-Reckoning algorithms using a low-cost MEMS IMU. *IEEE International Symposium on Intelligent Signal Processing,* 2009
- **Y.S.SUH et al.** Pedestrian inertial navigation with gait phase detection assisted zero velocity updating. *Proceedings of the 4th International Conference on Autonomous Robots and Agents,* 2009
- **S.Y.CHO et al.** A Personal Navigation System Using Low-Cost MEMS/GPS/Fluxgate. *ION 59th Annual Meeting,* 2003